# EUROPÄISCHE PATENTSCHRIFT

(11) **EP 3 317 062 B1**
(45) Veröffentlichungstag und Bekanntmachung des Hinweises auf die Patenterteilung: **06.05.2020**
(21) Anmeldenummer: 16741219.6
(22) Anmeldetag: 24.06.2016
(51) Int. Cl.: B29B 7/40, B29B 7/72, B29B 7/74, B29B 7/76

(54) **MISCHVORRICHTUNG MIT VERSTELLVORRICHTUNG ZUR SPALTEINSTELLUNG ZWISCHEN RÜHRER UND AUSBRINGÖFFNUNG**
MIXING DEVICE WITH ADJUSTMENT DEVICE FOR GAP SETTING BETWEEN STIRRER AND DISCHARGE OPENING
DISPOSITIF DE MÉLANGE COMPRENANT UN DISPOSITIF DE RÉGLAGE PERMETTANT LE RÉGLAGE DE LA FENTE ENTRE L'AGITATEUR ET L'ORIFICE DE SORTIE

(30) Priorität: 03.07.2015 AT 4362015
(43) Veröffentlichungstag der Anmeldung: 09.05.2018
(73) Patentinhaber: Henkel AG & Co. KGaA, 40589 Düsseldorf (DE)
(72) Erfinder: SCHWABL, Christian, 6900 Bregenz (AT); BALDAUF, Günther, 6914 Hohenweiler (AT); METZLER, Mario, 6890 Lustenau (AT)
(74) Vertreter: Torggler & Hofinger Patentanwälte
(86) Internationale Anmeldenummer: PCT/AT2016/050228
(87) Internationale Veröffentlichungsnummer: WO 2017/004637

(56) Entgegenhaltungen:
- EP-A2- 0 090 257
- WO-A1-00/23235
- WO-A1-2013/149273
- DE-A1- 1 949 756
- DE-A1-102012 002 047
- DE-U1-202005 013 008
- US-A- 5 902 042

## Beschreibung

Die vorliegende Erfindung betrifft eine Mischvorrichtung mit den Merkmalen des Oberbegriffs des Anspruchs 1.

Die Erfindung ist besonders bevorzugt bei der Herstellung geschäumter Kunststoffe (z.B. in Form von Kunststoffdichtungen) einsetzbar. Zur Erreichung einer gewünschten Mikrostruktur des Kunststoffes ist es erforderlich, dass in der Mischvorrichtung ein in einem bestimmten Druckfenster befindlicher Druck vorliegt. Ist eine Gasbeladung einer der beiden flüssigen Kunststoffkomponenten vorgesehen, hängt das bestimmte Druckfenster auch von der Gasbeladung ab. Variiert die gewünschte Austragsmenge aus der Ausbringöffnung, kann es zu einer stark schwankenden Qualität der Mikrostruktur des geschäumten Kunststoffes kommen.

Es ist bekannt, dass es auch bei Schwankungen von Temperatur oder Viskosität der ersten und zweiten flüssigen Kunststoffkomponenten sowie durch Verschmutzungen in der Mischvorrichtung zu Veränderungen der Qualität der Mikrostruktur kommen kann.

Es sind daher bereits Maßnahmen bekannt, die Temperatur zu stabilisieren, Verschmutzungen zu entfernen und die Viskosität konstant zu halten und zur Anpassung von unterschiedlichen Austragsmengen unterschiedliche Düsen zu verwenden. So ist in der DE 42 35 850 B4 eine gattungsgemäße Mischvorrichtung offenbart, deren Rührer eine Doppelfunktion erfüllt, nämlich einerseits die Rührfunktion und andererseits die Verschlussfunktion der Ausbringöffnung. Zum Erfüllen der Verschlussfunktion ist der Rührer heb- und senkbar in einer Mischkammer der Mischvorrichtung angeordnet. Um eine Anpassung an verschiedene Austragsmengen vornehmen zu können, ist das Auslaufdüsengehäuse auswechselbar.

In der EP 1 123 180 B1 ist ebenfalls eine gattungsgemäße Mischvorrichtung gezeigt, deren Rührer eine Doppelfunktion als Rührvorrichtung und Verschlussvorrichtung erfüllt. Zur Vermeidung von schlagartig einsetzenden Öffnungs- bzw. Schließbewegungen des Rührers, die bei der Verarbeitung empfindlicher Materialien Qualitätseinbußen bei den aus der verrührten Mischung hergestellten Werkstücken hervorrufen können, ist die Antriebseinheit zum Heben und Senken des Rührers mit einem Nockentrieb ausgestattet, dessen Betätigungsnocke eine Nockenform mit stetigem bzw. ruckfreiem Verlauf hat.

Auch in der US 5,902,042 A ist eine gattungsgemäße Mischvorrichtung offenbart.

Die bisher bekannten Mischvorrichtungen haben sich nicht mit der Qualität der Mikrostruktur des aus der Mischung geschäumten Kunststoffs befasst, sodass diese bei Einsatz der bekannten Mischvorrichtungen teilweise stark variieren kann.

Aufgabe der Erfindung ist es, dass eine gleichbleibende Qualität der Mikrostruktur des geschäumten Kunststoffes erreicht wird.

Diese Aufgabe wird durch eine Mischvorrichtung mit den Merkmalen des Anspruchs 1 gelöst.

Die Erfindung beruht auf der überraschenden Erkenntnis, dass durch Konstanthalten des Druckes in der Mischvorrichtung automatisch eine gleichbleibende Qualität der Mikrostruktur des geschäumten Kunststoffes erreichbar ist, da so Änderungen der Austragsmenge, Schwankungen von Temperatur, Viskosität der ersten und zweiten flüssigen Kunststoffkomponenten, Verschmutzungen, welche ja in unvorhersehbarer Weise den Druck in der Mischvorrichtung beeinflussen, ausregelbar sind.

Die Höhe des Druckes in der Mischvorrichtung ist unter anderem abhängig von der Größe des Spaltes zwischen dem Rührer und der Ausbringöffnung sowie von der Größe der Ausbringöffnung. Weitere Einflussgrößen auf den Druck, wie z.B. die Dimensionierung der Düse, können als konstant angesehen werden. Durch Bestimmung des in der Mischvorrichtung herrschenden Druckes und Verstellen des Spaltes oder der Größe der Ausbringöffnung mittels Sensor, Regeleinrichtung und Verstellvorrichtung kann der Druck in der Mischvorrichtung auf einen gewünschten vorbestimmten Wert eingestellt und im Wesentlichen konstant gehalten werden.

Die vorgeschlagene Mischvorrichtung ist insbesondere vorteilhaft, wenn die Mischvorrichtung im Niederdruckbereich bei einem in der Mischvorrichtung herrschenden Druck von unter etwa 20 bar betrieben wird. In diesem Druckbereich kann ein beispielsweise in der ersten flüssigen Kunststoffkomponente vorhandenes Gas - z.B. in Polyol gelöste Luft - bereits in der Mischkammer ausperlen. Das bereits in der Mischkammer ausgeperlte Gas dient als Kondensationskeim und sorgt für ein gleichmäßiges Ausschäumen der Mischung beim Ausbringen aus der Mischvorrichtung.

Durch Versuche wurde festgestellt, dass mit der vorgeschlagenen Mischvorrichtung eine gleichbleibende Mikrostruktur für einen großen Bereich an unterschiedlichen Austragsmengen erreicht werden kann. So konnte beispielsweise bei einer Verdoppelung oder Verdreifachung der Ausbringmenge eine im Wesentlichen unveränderte Mikrostruktur und damit eine gleichbleibende Qualität der Mikrostruktur erzielt werden.

Bei der ersten flüssigen Kunststoffkomponente kann es sich vorzugsweise um eine viskose Flüssigkeit handeln. Beispiele sind Polyole, Silikone, Epoxy, Polyester, Acrylate und MS-Polymere.

Beispiele für die zweite flüssige Kunststoffkomponente sind Isocyanat und Silikone.

Beispiele für das Gas, mit dem die erste und/oder zweite flüssige Kunststoffkomponente vermischt sein kann, sind Luft, Stickstoff, Kohlendioxid.

Es kann vorgesehen sein, dass das Gas in der ersten und/oder zweiten flüssigen Kunststoffkomponente zumindest teilweise gelöst vorliegt.

Weitere Beispiele für Systeme mit wenigstens 2 Komponenten sind:
- additionsvernetzendes Silikon mit Silikon als erste flüssige Kunststoffkomponente und Silikon als additionsvernetzendes Vernetzungsmittel
- kondensationsvernetztes Silikon z. B. mit Wasser und/oder Glykolen, oder gemäß der DE 10 2008 011 986 A1 mit Silikon als viskoser Flüssigkeit und Wasser und/oder Glykolen als kondensationsvernetzendes Vernetzungsmittel
- Polyurethan (Ergebnis) mit Isocyanat als Härtungsmittel vernetzt. Die Polyolkomponente als Flüssigkeit kann z. B. Polyesterpolyole, Polyetherpolyole, Thiole, Glykole, Amine, Kettenverlängerer und Acrylate enthalten. Die Isocyanate können aromatisch (z.B. auf Basis MDI, TDI) sowie aliphatisch (z.B. auf Basis HDI, IPDI, 12 fach hydriertes MDI) sein.
- Polyisocyanorate, die zweite Komponente enthält die Trimerisierungskatalysatoren und ggf. noch Polyole, andere Substanzen mit aktivem Wasserstoff oder nicht reaktive Verdünner.
- 1K NCO terminierte Polyurethane mit Wasser und/oder Glykolen als Härtungs- oder Vernetzungsmittel (Boostersysteme)
- Epoxidharzsysteme
- Silanmodifizierte Polymere mit Wasser und/oder Glykolen in der B Komponente , z.B. MS Polymere
- Acrylate, radikalisch gehärtet
- ungesättige Polyesterharze, radikalisch gehärtet
- Vinylesterharze, radikalisch gehärtet

Gemäß einem bevorzugten Ausführungsbeispiel kann vorgesehen sein, dass der Rührer relativ zur Ausbringöffnung verfahrbar ausgebildet ist. Dabei kann vorgesehen sein, dass die Verstellvorrichtung mit dem Rührer verbunden ist, wobei durch die Verstellvorrichtung der Rührer relativ zur Ausbringöffnung bewegbar ist.

Es kann vorgesehen sein, dass die Verstellvorrichtung einen Linearmotor umfasst, der vorzugsweise an einer Welle des Rührers angeordnet ist.

Es kann vorgesehen sein, dass die Ausbringöffnung größenveränderbar ausgebildet ist. Dabei kann vorgesehen sein, dass die Verstellvorrichtung mit der Ausbringöffnung verbunden ist, wobei durch die Verstellvorrichtung die Größe der Ausbringöffnung veränderbar ist. Die Verstellvorrichtung kann beispielsweise als irisartige Blende ausgebildet sein, wobei die Ausbringöffnung durch den freibleibenden zentralen Bereich der Irisblende gebildet wird. Alternativ kann die Verstellvorrichtung als ein elastisches Element in der Art einer Schlauchklemme ausgebildet sein, wobei die Ausbringöffnung durch die freibleibende lichte Weite im Schlauch gebildet ist.

Ist die Mischvorrichtung längserstreckt ausgebildet, kann es vorteilhaft sein, wenn die wenigstens eine Zuführöffnung für die wenigstens eine erste flüssige Kunststoffkomponente und die zumindest eine weitere Zuführöffnung für die zumindest eine zweite flüssige Kunststoffkomponente an unterschiedlichen axialen Positionen der Mischvorrichtung angeordnet sind. Weil das Mischen der beiden flüssigen Kunststoffkomponenten erst im Bereich jener Zuführöffnung erfolgt, die näher bei der Ausbringöffnung liegt, kommt es im axial darüber liegenden Bereich zu keiner oder nur einer geringen Verschmutzung.

Es kann vorgesehen sein, dass die Ausbringöffnung der Mischvorrichtung mit einer Düse verbunden ist.

Bevorzugt kann vorgesehen sein, dass der vorbestimmte Wert für den in der Mischvorrichtung herrschenden Druck kleiner als 20 bar, vorzugsweise kleiner als 10 bar, besonders bevorzugt etwa 2 bis etwa 4 bar, ist.

Schutz wird auch begehrt für eine Anordnung mit einer Mischvorrichtung nach wenigstens einem der vorangehenden Ausführungsbeispiele und einer Quelle für die wenigstens eine erste flüssige Kunststoffkomponente, die mit der wenigstens einen Zuführöffnung für die wenigstens eine erste flüssige Kunststoffkomponente verbunden ist, wobei vorzugsweise die wenigstens eine erste flüssige Kunststoffkomponente mit einem Gas vermischt ist, und einer Quelle für die zumindest eine zweite flüssige Kunststoffkomponente, die mit der zumindest einen weiteren Zuführöffnung für die zumindest eine zweite flüssige Kunststoffkomponente verbunden ist, wobei vorzugsweise die zumindest eine zweite flüssige Kunststoffkomponente mit einem Gas vermischt ist.

Ausführungsformen der Erfindung werden anhand der Figuren diskutiert. Es zeigen:
- Fig. 1: ein erstes Ausführungsbeispiel einer erfindungsgemäßen Mischvorrichtung,
- Fig. 2: eine Detailansicht der Mischvorrichtung gemäß Fig. 1 und
- Fig. 3: eine nicht erfindungsgemäße Mischvorrichtung.

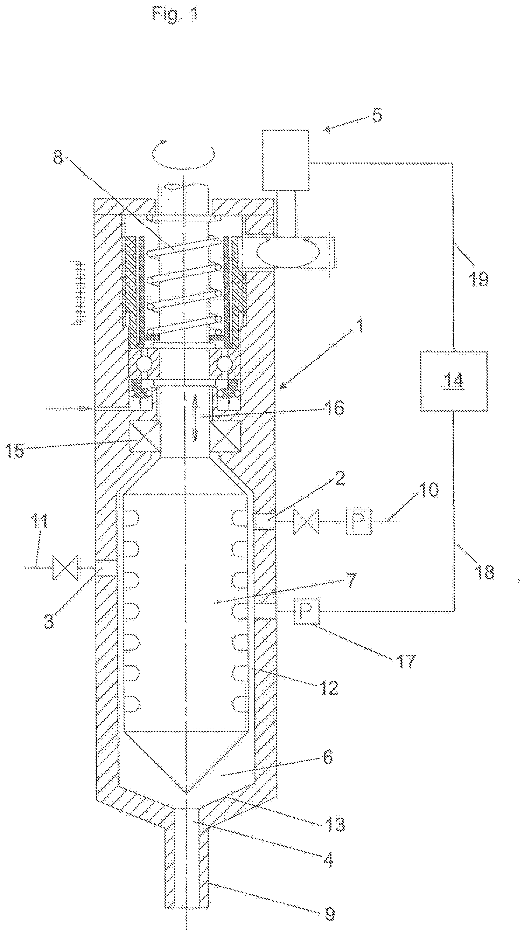

Fig. 1 zeigt eine Mischvorrichtung 1 mit einer Mischkammer 12. Es sind eine Zuführöffnung 2 für wenigstens eine erste flüssige Kunststoffkomonente (z.B. Polyol) und eine weitere Zuführöffnung 3 für zumindest eine zweite flüssige Kunststoffkomponente (z.B. Isocyanat) ersichtlich, die in die Mischkammer 12 führen. Die Mischvorrichtung 1 ist dynamisch ausgebildet und umfasst einen Rührer 7, der in der Mischkammer 12 rotierbar ist. Die erste und/oder die zweite flüssige Kunststoffkomponente können mit einem Gas - z.B. Luft - gemischt sein.

Zum Erzeugen der Mischung aus erster und zweiter flüssiger Kunststoffkomponente werden die in diesem Beispiel mit Luft vermischte erste flüssige Kunststoffkomponente, die von einer Quelle 10 bereitgestellt wird, durch die erste Zuführöffnung 2 und die zweite flüssige Kunststoffkomponente, die von einer weiteren Quelle 11 bereitgestellt wird, durch die zweite Zuführöffnung 3 an unterschiedlichen axialen Positionen der hier längserstreckt ausgebildeten Mischvorrichtung 1 eingebracht. Durch den rotierenden Rührer 7 kommt es zum Vermischen dieser beiden Komponenten.

Benachbart zur Spitze des Rührers 7 ist eine Ausbringöffnung 4 zum Ausbringen der Mischung bestehend aus erster und zweiter flüssiger Kunststoffkomponente aus der Mischkammer 12 vorgesehen. Über einen zwischen Rührer 7 und Ausbringöffnung 4 verbleibenden Spalt 6 ist die Mischung aus der Ausbringöffnung 4 in Richtung einer Düse 9 ausbringbar.

Es ist eine Verstellvorrichtung 5 vorgesehen, durch welche eine Relativbewegung zwischen Ausbringöffnung 4 und Rührer 7 hervorrufbar und damit der Spalt 6 zwischen Rührer 7 und Ausbringöffnung 4 veränderbar ist. Die Verstellvorrichtung 5 weist einen Schrittmotor auf, der über eine Welle in ein Zahnrad eingreift, das seitlich in eine konzentrisch zur Welle 16 angeordnete Schraubhülse eingreift. Ein Drehen des Zahnrads durch den Schrittmotor bewirkt ein axiales Verstellen der Schraubhülse, wodurch die Höheneinstellung des Rührers 7 erfolgt, was den Spalt zwischen Rührer 7 und Ausbringöffnung 4 einstellt. Über die schematisch dargestellte Skala kann eine Messung der erfolgten Verstellung erfolgen und an die Regeleinrichtung 14 gemeldet werden (die entsprechenden Signalleitungen sind nicht dargestellt). Während den Dosierungen wird in Richtung des schematisch dargestellten Pfeiles Luft in den Bereich oberhalb der Dichtung 15 eingebracht, was zu einem Anheben des Rührers 7 entgegen der Beaufschlagung durch den Kraftspeicher 8 bis zum durch die Schraubhülse definierten Anschlag führt. Wird der Luftdruck abgeschaltet, bewegt der Kraftspeicher 8 den Rührer 7 so weit in Richtung der Ausbringöffnung 4 (in dieser Darstellung nach unten), bis der Rührer 7 die Ausbringöffnung 4 verschließt.

Zur Bestimmung eines in der Mischvorrichtung 1 bzw. deren Mischkammer 12 herrschenden Druckes ist ein Sensor 17 vorgesehen, der über eine Signalleitung 18 mit einer Regeleinrichtung 14 in signalleitender Verbindung steht. Die Regeleinrichtung 14 wiederum steht über eine Steuerleitung 19 mit der Verstelleinrichtung 5 in signalleitender Verbindung, sodass die Regeleinrichtung 14 über die Verstellvorrichtung 5 den Spalt 6 derart einstellen kann, dass der in der Mischvorrichtung 1 bzw. deren Mischkammer 12 herrschende Druck einen vorbestimmten Wert von beispielsweise kleiner 20 bar aufweist. Alternativ zur gezeigten Positionierung des Sensors 17 sind auch andere Positionierungen denkbar, z.B. in der Leitung 10.

Im vorliegenden Ausführungsbeispiel sind die Druckverhältnisse so gewählt, dass es in der Mischkammer 12 zu einem konstanten Druck kommt, der niedrig genug ist, dass ein in der Mischung vorhandenes Schäummittel ausschäumen kann.

Wenn sich während oder nach eines Ausbringvorganges der Mischung aus der Mischvorrichtung 1 der Druck in der Mischvorrichtung 1 bzw. deren Mischkammer 12 verändert, kann diese Druckänderung über den Sensor 17 erfasst werden und die Regeleinrichtung 14 kann die Verstellvorrichtung 5 derart ansteuern, dass dieser Druckänderung durch eine entsprechende Relativbewegung zwischen Rührer 7 und Ausbringöffnung 4 entgegengewirkt wird und der gewünschte vorbestimmte Druck in der Mischvorrichtung 1 aufrechterhalten wird. Insbesondere kann eine entsprechende Druckanpassung nach jedem Ausbringvorgang bzw. nach jeder Dosierung erfolgen.

Eine Dichtung 15 (die in einer Richtung oder in beide Richtungen dichtend wirken kann) umschließt dichtend die rotierende Welle 16 des Rührers 7 und dichtet die Mischkammer 12 im Bereich der Welle 16 des Rührers 7 ab. Die Dichtung 15 kann beispielsweise aus Teflon bestehen und eine leichtgängige axiale Bewegung der rotierenden Welle 16 ermöglichen. Dadurch, dass die Welle 16 rotiert und die Dichtung 15 eine geringe Reibung verursacht, kann eine sehr feine axiale Positionsanpassung des Rührers 7 erzielt werden. Insbesondere können dadurch ungewünschte Druckschwankungen durch ruckartigen axialen Versatz des Rührers 7 infolge eines Stick-Slip-Effekts vermieden werden. Durch die Rotation der Welle 16 wird auch das axiale Verschieben des Rührers 7 erleichtert. Vorzugsweise ist die Dichtung 15 als Rotations- und Translationsdichtung ausgebildet.

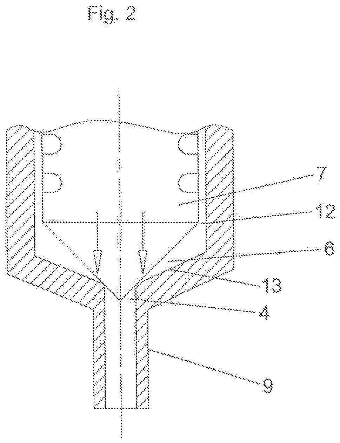

Fig. 2 zeigt eine Detailansicht der Spitze des Rührers 7 der Mischvorrichtung 1 gemäß Fig. 1 in einem geänderten Betriebszustand, in welchem der Rührer 7 axial so weit relativ zur Ausbringöffnung 4 bewegt wurde, dass er die Ausbringöffnung 4 verschließt. Die Spitze des Rührers 7 ist spitzer ausgebildet als die Neigung der Stirnfläche 13 der Mischkammer 12. Dadurch liegt die Spitze des Rührers 7 nur ringförmig an der Stirnfläche 13 an und ragt in die Ausbringöffnung 4 hinein, um diese ringförmig abzuschließen.

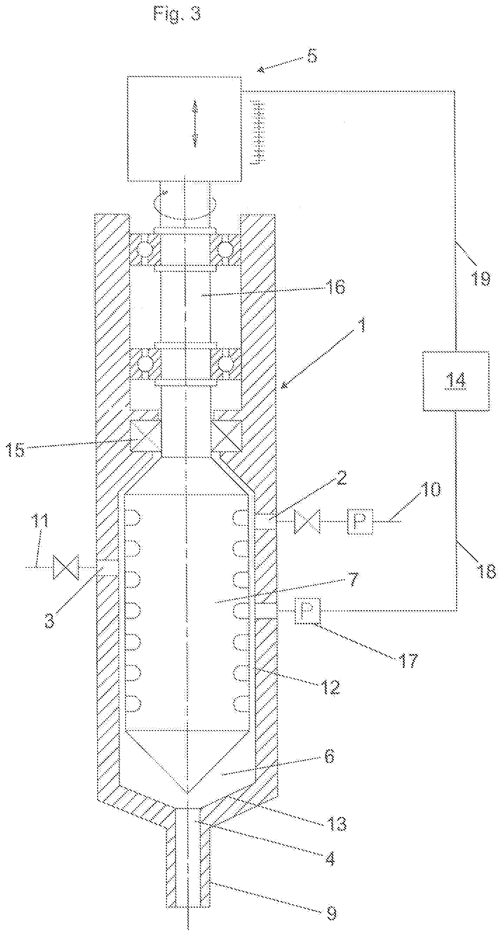

Fig. 3 zeigt eine nicht erfindungsgemäße Mischvorrichtung 1. Im Unterschied zum Ausführungsbeispiel gemäß Fig. 1 umfasst hierbei die Verstellvorrichtung 5 einen an der Welle 16 des Rührers 7 angeordneten Linearmotor, der den Rührer 7 direkt axial anheben und absenken kann und somit die erforderliche Relativbewegung zwischen Rührer 7 und Ausbringöffnung 4 hervorrufen kann, um den Spalt 6 im erforderlichen Ausmaß zu verändern, damit der in der Mischvorrichtung 1 bzw. deren Mischkammer 12 herrschende Druck den gewünschten vorbestimmten Wert aufweist. Über die schematisch dargestellte Skala kann eine Messung der erfolgten Verstellung erfolgen und an die Regeleinrichtung 14 gemeldet werden (die entsprechenden Signalleitungen sind nicht dargestellt).

Anders als dargestellt kann die Verstellvorrichtung 5 zum Beispiel auch einen an sich bekannten Nockenantrieb, Spindelantrieb oder hydraulischen Antrieb umfassen.

### Bezugszeichenliste:

- 1: Mischvorrichtung
- 2: erste Zuführöffnung für wenigstens eine erste flüssige Kunststoffkomponente
- 3: zweite Zuführöffnung für zumindest eine zweite flüssige Kunststoffkomponente
- 4: Ausbringöffnung
- 5: Verstellvorrichtung
- 6: Spalt
- 7: Rührer
- 8: Kraftspeicher
- 9: Düse
- 10: Quelle für wenigstens eine erste flüssige Kunststoffkomponente
- 11: Quelle für zumindest eine zweite flüssige Kunststoffkomponente
- 12: Mischkammer
- 13: Stirnfläche
- 14: Regeleinrichtung
- 15: Dichtung
- 16: Welle
- 17: Sensor
- 18: Signalleitung
- 19: Steuerleitung

## Patentansprüche

1. Mischvorrichtung (1) mit wenigstens einer ersten Zuführöffnung (2) für wenigstens eine erste flüssige - vorzugsweise mit einem Gas beladene - Kunststoffkomponente und mit zumindest einer zweiten Zuführöffnung (3) für zumindest eine zweite flüssige Kunststoffkomponente, und einer Ausbringöffnung (4) zum Ausbringen einer in der Mischvorrichtung (1) herstellbaren Mischung aus der ersten und der zweiten flüssigen Kunststoffkomponente, wobei die Mischvorrichtung (1) einen rotierenden Rührer (7) zum Vermischen der ersten und der zweiten flüssigen Kunststoffkomponente aufweist, wobei zwischen dem Rührer (7) und der Ausbringöffnung (4) ein Spalt (6) verbleibt, wobei eine Verstellvorrichtung (5) vorgesehen ist, welche entweder durch eine Relativbewegung zwischen Ausbringöffnung (4) und Rührer (7) den Spalt (6) oder die Größe der Ausbringöffnung (4) verändert und dass eine Regeleinrichtung (14) vorgesehen ist, die mit einem Sensor (17) zur Bestimmung eines in einer Mischkammer (12) der Mischvorrichtung (1) herrschenden Druckes in signalleitender Verbindung steht, wobei die Regeleinrichtung (14) über die Verstellvorrichtung (5) den Spalt (6) oder die Größe der Ausbringöffnung (4) derart einstellt, dass der in der Mischkammer (12) der Mischvorrichtung (1) herrschende Druck einen vorbestimmten Wert aufweist, **dadurch gekennzeichnet, dass** die Verstellvorrichtung (5) einen Schrittmotor aufweist, der über eine Welle in ein Zahnrad eingreift, das seitlich in eine konzentrisch zur Welle (16) des Rührers (7) angeordnete Schraubhülse eingreift, wobei ein Drehen des Zahnrads durch den Schrittmotor ein axiales Verstellen der Schraubhülse bewirkt, wodurch die Höheneinstellung des Rührers (7) erfolgt, was den Spalt zwischen Rührer (7) und Ausbringöffnung (4) einstellt.

2. Mischvorrichtung nach Anspruch 1, wobei der Rührer (7) relativ zur Ausbringöffnung (4) verfahrbar ausgebildet ist.

3. Mischvorrichtung nach Anspruch 2, wobei die Verstellvorrichtung (5) mit dem Rührer (7) verbunden ist, wobei durch die Verstellvorrichtung (5) der Rührer (7) relativ zur Ausbringöffnung (4) bewegbar ist.

4. Mischvorrichtung nach wenigstens einem der vorangehenden Ansprüche, wobei die Verstellvorrichtung (5) einen Linearmotor umfasst, der vorzugsweise an einer Welle (16) des Rührers (7) angeordnet ist.

5. Mischvorrichtung nach Anspruch 1, wobei die Ausbringöffnung (4) größenveränderbar ausgebildet ist.

6. Mischvorrichtung nach Anspruch 5, wobei die Verstellvorrichtung (5) mit der Ausbringöffnung (4) verbunden ist, wobei durch die Verstellvorrichtung (5) die Größe der Ausbringöffnung (4) veränderbar ist.

7. Mischvorrichtung nach wenigstens einem der vorangehenden Ansprüche, wobei die Mischvorrichtung (1) längserstreckt ausgebildet ist und die wenigstens eine Zuführöffnung (2) für die wenigstens eine erste flüssige Kunststoffkomponente und die zumindest eine weitere Zuführöffnung (3) für die zumindest eine zweite flüssige Kunststoffkomponente an unterschiedlichen axialen Positionen der Mischvorrichtung (1) angeordnet sind.

8. Mischvorrichtung nach wenigstens einem der vorangehenden Ansprüche, wobei die Ausbringöffnung (4) der Mischvorrichtung (1) mit einer Düse (9) verbunden ist.

9. Mischvorrichtung nach wenigstens einem der vorangehenden Ansprüche, wobei der vorbestimmte Wert für den in der Mischvorrichtung (1) herrschenden Druck kleiner als 20 bar, vorzugsweise kleiner als 10 bar, besonders bevorzugt etwa 2 bis etwa 4 bar, ist.

10. Anordnung mit einer Mischvorrichtung (1) nach wenigstens einem der vorangehenden Ansprüche und
- einer Quelle (10) für die wenigstens eine erste flüssige Kunststoffkomponente, die mit der wenigstens einen Zuführöffnung (2) für die wenigstens eine erste flüssige Kunststoffkomponente verbunden ist, wobei vorzugsweise die wenigstens eine erste flüssige Kunststoffkomponente mit einem Gas vermischt ist, und
- einer Quelle (11) für die zumindest eine zweite flüssige Kunststoffkomponente, die mit der zumindest einen weiteren Zuführöffnung (3) für die zumindest eine zweite flüssige Kunststoffkomponente verbunden ist, wobei vorzugsweise die zumindest eine zweite flüssige Kunststoffkomponente mit einem Gas vermischt ist.

## Claims

1. A mixing device (1) having at least one first feed opening (2) for at least one first liquid plastics component, preferably charged with a gas, and having at least one second feed opening (3) for at least one second liquid plastics component, and a discharge opening (4) for discharging a mixture of the first and the second liquid plastics components that can be produced in the mixing device (1), the mixing device (1) having a rotating stirrer (7) for mixing the first and the second liquid plastics components, a gap (6) remaining between the stirrer (7) and the discharge opening (4), an adjusting device (5) being provided which changes either the gap (6) or the size of the discharge opening (4) by means of a relative movement between the discharge opening (4) and the stirrer (7), and a control means (14) being provided which is in signal-conducting connection with a sensor (17) for determining a pressure prevailing in a mixing chamber (12) of the mixing device (1), the control means (14) adjusting the gap (6) or the size of the discharge opening (4) by means of the adjusting device (5) such that the pressure prevailing in the mixing chamber (12) of the mixing device (1) has a predetermined value, **characterized in that** the adjusting device (5) has a stepper motor which engages via a shaft in a toothed wheel which laterally engages in a screw sleeve arranged concentrically to the shaft (16) of the stirrer (7), a rotation of the toothed wheel by the stepper motor causing an axial adjustment of the screw sleeve, as a result of which the height of the stirrer (7) is adjusted, which adjusts the gap between the stirrer (7) and discharge opening (4).

2. The mixing device according to claim 1, wherein the stirrer (7) is designed to be movable relative to the discharge opening (4).

3. The mixing device according to claim 2, wherein the adjusting device (5) is connected to the stirrer (7), wherein the stirrer (7) can be moved relative to the discharge opening (4) by means of the adjusting device (5).

4. The mixing device according to at least one of the preceding claims, wherein the adjusting device (5) comprises a linear motor, which is preferably arranged on a shaft (16) of the stirrer (7).

5. The mixing device according to claim 1, wherein the discharge opening (4) is resizable.

6. The mixing device according to claim 5, wherein the adjusting device (5) is connected to the discharge opening (4), wherein the size of the discharge opening (4) can be changed by the adjusting device (5).

7. The mixing device according to at least one of the preceding claims, wherein the mixing device (1) is elongate and the at least one feed opening (2) for the at least one first liquid plastics component and the at least one further feed opening (3) for the at least one second liquid plastics component are arranged at different axial positions of the mixing device (1).

8. The mixing device according to at least one of the preceding claims, wherein the discharge opening (4) of the mixing device (1) is connected to a nozzle (9).

9. The mixing device according to at least one of the preceding claims, wherein the predetermined value for the pressure prevailing in the mixing device (1) is less than 20 bar, preferably less than 10 bar, particularly preferably approximately 2 to approximately 4 bar.

10. An arrangement having a mixing device (1) according to at least one of the preceding claims and
- a source (10) for the at least one first liquid plastics component, which is connected to the at least one feed opening (2) for the at least one first liquid plastics component, wherein the at least one first liquid plastics component is preferably mixed with a gas, and
- a source (11) for the at least one second liquid plastics component, which is connected to the at least one additional feed opening (3) for the at least one second liquid plastics component, wherein the at least one second liquid plastics component is preferably mixed with a gas.

## Revendications

1. Dispositif de mélange (1) comprenant au moins une première ouverture d'alimentation (2) pour au moins un premier composant plastique liquide - de préférence chargé avec un gaz - et au moins une seconde ouverture d'alimentation (3) pour au moins un second composant plastique liquide, et une ouverture de décharge (4) destinée à la décharge d'un mélange du premier et du second composant plastique liquide pouvant être produit dans le dispositif de mélange (1), le dispositif de mélange (1) présentant un agitateur rotatif (7) destiné au mélange du premier et du second composant plastique liquide, une fente (6) étant ménagée entre l'agitateur (7) et l'ouverture de décharge (4), un dispositif de déplacement (5) étant prévu, lequel dispositif de déplacement modifie soit la fente (6) par un mouvement relatif entre l'ouverture de décharge (4) et l'agitateur (7) soit la taille de l'ouverture de décharge (4), et un moyen de réglage (14) étant prévu, lequel moyen de réglage est en liaison par conduction de signaux avec un capteur (17) destiné à déterminer une pression régnant dans une chambre de mélange (12) du dispositif de mélange (1), le moyen de réglage (14) réglant la fente (6) ou la taille de l'ouverture de décharge (4) par l'intermédiaire du dispositif de déplacement (5) de telle manière que la pression régnant dans la chambre de mélange (12) du dispositif de mélange (1) présente une valeur prédéfinie, **caractérisé en ce que** le dispositif de déplacement (5) présente un moteur pas à pas qui vient en prise avec une roue dentée par l'intermédiaire d'un arbre, laquelle roue dentée vient en prise latéralement avec un manchon fileté disposé concentriquement à l'arbre (16) de l'agitateur (7), la rotation de la roue dentée par le moteur pas à pas provoquant un déplacement axial du manchon fileté, permettant ainsi le réglage en hauteur de l'agitateur (7), ce qui règle la fente entre l'agitateur (7) et l'ouverture de décharge (4).

2. Dispositif de mélange selon la revendication 1, dans lequel l'agitateur (7) est conçu pour être mobile par rapport à l'ouverture de décharge (4).

3. Dispositif de mélange selon la revendication 2, dans lequel le dispositif de déplacement (5) est relié à l'agitateur (7), l'agitateur (7) pouvant être déplacé par rapport à l'ouverture de décharge (4) par le dispositif de déplacement (5).

4. Dispositif de mélange selon au moins l'une des revendications précédentes, dans lequel le dispositif de déplacement (5) comporte un moteur linéaire qui est disposé de préférence au niveau d'un arbre (16) de l'agitateur (7).

5. Dispositif de mélange selon la revendication 1, dans lequel l'ouverture de décharge (4) est conçue pour être de taille variable.

6. Dispositif de mélange selon la revendication 5, dans lequel le dispositif de déplacement (5) est relié à l'ouverture de décharge (4), la taille de l'ouverture de décharge (4) pouvant être modifiée par le dispositif de déplacement (5).

7. Dispositif de mélange selon au moins l'une des revendications précédentes, le dispositif de mélange (1) étant conçu pour être étendu longitudinalement, et l'au moins une ouverture d'alimentation (2) pour l'au moins un premier composant plastique liquide et l'au moins une autre ouverture d'alimentation (3) pour l'au moins un second composant plastique liquide étant disposées à différentes positions axiales du dispositif de mélange (1).

8. Dispositif de mélange selon au moins l'une des revendications précédentes, dans lequel l'ouverture de décharge (4) du dispositif de mélange (1) est reliée à une buse (9).

9. Dispositif de mélange selon au moins l'une des revendications précédentes, dans lequel la valeur prédéfinie pour la pression régnant dans le dispositif de mélange (1) est inférieure à 20 bars, de préférence inférieure à 10 bars, de manière particulièrement préférée d'environ 2 à environ 4 bars.

10. Agencement comprenant un dispositif de mélange (1) selon au moins l'une des revendications précédentes et
- une source (10) pour l'au moins un premier composant plastique liquide, laquelle source est reliée à l'au moins une ouverture d'alimentation (2) pour l'au moins un premier composant plastique liquide, l'au moins un premier composant plastique liquide étant de préférence mélangé avec un gaz, et
- une source (11) pour l'au moins un second composant plastique liquide, laquelle source est reliée à l'au moins une autre ouverture d'alimentation (3) pour l'au moins un second composant plastique liquide, l'au moins un second composant plastique liquide étant de préférence mélangé avec un gaz.
